# EUROPEAN PATENT SPECIFICATION

(11) **EP 4 473 047 B1**
(45) Date of publication and mention of the grant of the patent: **12.08.2026**
(21) Application number: 23707541.1
(22) Date of filing: 27.01.2023
(51) Int. Cl.: C08J 11/08

(54) **METHODS FOR PURIFYING A RECLAIMED POLYMER**
VERFAHREN ZUR REINIGUNG EINES AUFBEREITETEN POLYMERS
MÉTHODES DE PURIFICATION D'UN POLYMÈRE RÉCUPÉRÉ

(30) Priority: 31.01.2022 US 202263304941 P; 15.11.2022 US 202263425365 P
(43) Date of publication of application: 11.12.2024
(60) Divisional application: 25175825.6 / 4 596 615
(73) Proprietor: Dow Global Technologies LLC, Midland, MI 48674 (US)
(72) Inventor: YE, Yi, Lake Jackson, Texas 77566 (US); DHODAPKAR, Shrikant, Freeport, Texas 77541 (US); GAUBERT, Joshua B., Lake Jackson, Texas 77566 (US); SIMONS, Matthew C., Lake Jackson, Texas 77566 (US); ZOGG, JR., Michael J., Lake Jackson, Texas 77566 (US); TURNER, Michael D., Lake Jackson, Texas 77566 (US); WANG, Alec Y., Lake Jackson, Texas 77566 (US)
(74) Representative: Boult Wade Tennant LLP
(86) International application number: PCT/US2023/011692
(87) International publication number: WO 2023/147013

(56) References cited:
- CN-B- 101 367 957
- FR-A1- 3 117 395
- FR-A1- 3 117 396
- FR-A1- 3 117 397
- US-A- 2 914 453
- US-A1- 2018 022 888
- US-A1- 2019 390 031
- US-A1- 2019 390 032
- US-A1- 2019 390 033
- US-A1- 2021 380 777
- US-B2- 11 008 433
- KIRBY CHRISTOPHER F. ET AL: "Phase Behavior of Polymers in Supercritical Fluid Solvents", JOURNAL OF ORGANIC CHEMISTRY, vol. 99, no. 2, 13 January 1999 (1999-01-13), pages 565 - 602, XP93042453, DOI: 10.1021/cr970046j
- THE INTERNATIONAL UNION OF PURE AND APPLIED CHEMISTRY (IUPAC): "IUPAC - concentration (C01222)", 24 February 2014 (2014-02-24), pages 1 - 2, XP93042495, Retrieved from the Internet <URL:https://goldbook.iupac.org/terms/view/C01222> [retrieved on 20230426]

## Description

### Field of Disclosure

Embodiments of the present disclosure are directed towards polymers, more specifically, methods for purifying a reclaimed polymer.

### Background

There is currently high demand for polymers worldwide; consumption of polyethylene and polypropylene in 2020 was greater than 100 million and 80 million tons respectively. The demand is projected to further increase, and comes at a time of increasing demand to limit the impact plastics have on the environment. Re-using, or recycling, plastic waste is advantageous, not only in limiting the amount that irreversibly enters the environment, but also in reducing the amount of new, or virgin, polymers produced by highly energy and CO2 intensive processes.

Mechanically recycled polymers are obtained by collecting and sorting post-consumer or post-industrial reclaimed materials into predominately uniform polymer streams that are washed with aqueous and/or caustic solutions before being reprocessed into pellets of recycled polymers. The reprocessed pellet, however, often remains contaminated with unwanted impurities, including organoleptic compounds, coloring agents, gels, heavy metals, and plasticizers, that were added to the product for specific applications, alongside other polymers that were not removed during the mechanical sorting process. These impurities result in recycled polymers with diminished physical properties that limit their reuse, and are thus often downcycled to a limited number of less demanding applications, while ubiquitous sources of plastic waste, such as multi-layer packaging and films, are excluded altogether as the polymers contained within are unsortable by current mechanical recycling methods.

Solvent based methods have been developed to address the limitations of mechanical recycling, aiming to remove at least some of these impurities to produce purer reclaimed polymers with improved physical properties. The span of potential impurities to be removed can be matched to different solvent-based process operations, including but not limited to dissolution, crystallization, sedimentation, centrifugation, filtration, adsorption, and extraction, or combinations of, each tailored to remove specific impurities. While capable of producing purified polymers with properties approaching those of the virgin material, solvent-based methods entail higher costs and additional process risks. The more complex processes to handle the solvents over a wide range of operating conditions necessitate higher capital equipment, energy, and other operating costs versus mechanical recycling, as well as introduce complex phenomena such as fouling and plugging that can further increase costs and, potentially, render an entire process unviable. These problems are exacerbated as the variability of the polymer containing stream to be recycled increases; such variable streams must be recycled in high quantities if the fraction of polymers recycled on a global scale is to substantially increase. Amongst these challenges, the purified reclaimed polymer must remain economically competitive with virgin material. Clearly, a select and innovative combination of processes must be carefully designed for new solvent-assisted methods that purify an expanded range of reclaimed polymer sources that are sound to operate and economically viable. For example, US 2019/390032 A1 discloses a method to purify a reclaimed polymer using selective solvation of a polymer under specific temperature/ pressure conditions, further comprising the steps of a filtration, sorption and extraction. However, US 2019/390032 A1 does not disclose that these steps are done in a distinct vessel, and the order in which the steps are done (extraction, dissolution, filtration, sorption, polymer recovery) is different from what is done in this patent (dissolution, filtration, sorption, extraction, polymer recovery).

### Summary

The present disclosure provides methods for purifying a reclaimed polymer, the method including transferring the reclaimed polymer to a polymer dissolution vessel, wherein the reclaimed polymer comprises a solid, selectively dissolving the solid reclaimed polymer in the polymer dissolution vessel with a solvent to make a polymer dissolution vessel composition, wherein the polymer dissolution vessel has a temperature from 70 °C to 180 °C and a pressure from 0,1 MPa (1 bar) to 3 MPa (30 bar), transferring the polymer dissolution vessel composition to a filtration vessel to remove a first insoluble contaminant and make a filtration vessel composition, wherein the filtration vessel has a temperature from 70 °C to 180 °C and a pressure from 0,1 MPa (1 bar) to 3 MPa (30 bar), transferring the filtration vessel composition to a sorptive separation vessel to remove a first soluble contaminant and make a sorptive separation vessel composition, wherein the sorptive separation vessel has a temperature from 70 °C to 180 °C and a pressure from 0,1 MPa (1 bar) to 3 MPa (30 bar), and transferring the sorptive separation vessel composition to an extraction vessel to remove a first targeted portion of the solvent and a second soluble contaminant to make an extraction vessel composition, wherein the extraction vessel has a temperature from 130 °C to 300 °C and a pressure from 3 MPa (30 bar) to 25 MPa (250 bar), and transferring the extraction vessel composition to a polymer concentration vessel to remove a second targeted portion of the solvent and a third soluble contaminant to make a purified reclaimed polymer.

The above summary of the present disclosure is not intended to describe each disclosed embodiment or every implementation of the present disclosure. The description that follows more particularly exemplifies illustrative embodiments. In several places throughout the application, guidance is provided through lists of examples, which examples can be used in various combinations. In each instance, the recited list serves only as a representative group and should not be interpreted as an exclusive list.

### Brief Description of the Drawings

Figure 1 illustrates an example of a portion of a system in accordance with one or more embodiments of the present disclosure.
Figure 2 illustrates an example of a portion of a system in accordance with one or more embodiments of the present disclosure.

### Detailed Description

Methods for purifying a reclaimed polymer are disclosed herein. Advantageously the methods disclosed herein can provide improved contaminant removal efficiency, as compared to other polymer purification processes, can utilize a solid polymer feed with wide variability of feed stock, can provide reduced fouling, as compared to other polymer purification processes, and/or can provide a purified reclaimed polymer having a number of properties that are desirable for various applications, for example an improved, e.g., lower, amount of residual solvent, an improved, e.g., less, odor, and/or an improved, e.g., less, color. Methods for purifying a reclaimed polymer, as disclosed herein, can include transferring the reclaimed polymer to a polymer dissolution vessel, wherein the reclaimed polymer comprises a solid, selectively dissolving the solid reclaimed polymer in the polymer dissolution vessel with a solvent to make a polymer dissolution vessel composition, wherein the polymer dissolution vessel has a temperature from 70 °C to 180 °C and a pressure from 0,1 MPa (1 bar) to 3 MPa (30 bar), transferring the polymer dissolution vessel composition to a filtration vessel to remove a first insoluble contaminant and make a filtration vessel composition, wherein the filtration vessel has a temperature from 70 °C to 180 °C and a pressure from 0,1 MPa (1 bar) to 3 MPa (30 bar), transferring the filtration vessel composition to a sorptive separation vessel to remove a first soluble contaminant and make a sorptive separation vessel composition, wherein the sorptive separation vessel has a temperature from 70 °C to 180 °C and a pressure from 0,1 MPa (1 bar) to 3 MPa (30 bar), and transferring the sorptive separation vessel composition to an extraction vessel to remove a first targeted portion of the solvent and a second soluble contaminant to make an extraction vessel composition, wherein the extraction vessel has a temperature from 130 °C to 300°C and a pressure from 3 MPa (30 bar) to 25 MPa (250 bar), and transferring the extraction vessel composition to a polymer concentration vessel to remove a second targeted portion of the solvent and a third soluble contaminant to make a purified reclaimed polymer. One or more embodiments provide that solid media, as discussed further herein, may be added to
the filtration vessel, e.g., such that the solid media provides filtration aid. A vessel, as referred to herein, can be equipment in series, in parallel or a combination thereof. Embodiments provide that the methods for purifying a reclaimed polymer, as disclosed herein, may be a continuous process, a batch process, or a combination thereof.

Surprisingly, it has been found that by selectively dissolving the reclaimed polymer as the first process step, e.g., prior to a filtration step, a sorption step, and an extraction step, reduces process fouling / plugging and can provide a more consistent and/or improved composition of purified reclaimed polymer. The selective dissolution step, as discussed herein, may help minimize the formation of a second polymer liquid phase. Without the selective dissolution, as discussed herein, different polymers, such as polyethylene and polypropylene may form individual liquid phases with a solvent if the solvent prefers one polymer over the other, e.g., n-butane more likely stays with polypropylene, as compared to polyethylene. The polyethylene-solvent phase can be heavier than a polypropylene-solvent phase. Such density differences between the two phases may become smaller at lower temperatures. This undesired phase separation can affect the purified reclaimed polymer quality and cause process issues. A light polypropylene phase attracting more solvent is not advantageous for mainly polyethylene recycling, where polyethylene is more concentrated (viscous) and contains most undissolved heavy contaminants.

As used herein, the term "reclaimed polymer" refers to a polymer that has been used for a previous purpose and then recovered for further processing. For instance, "reclaimed polymer" can refer to polymers recovered from post-consumer material as defined by ISO 14021, polymers recovered from pre-consumer material as defined by ISO 14021, and combinations thereof. The generic term post-consumer material includes blends of polymers recovered from materials generated by households or by commercial, industrial, and institutional facilities in their role as end-users of the material, which can no longer be used for its intended purpose. The generic term post-consumer material also includes blends of polymers recovered from returns of materials from the distribution chain. The generic term pre-consumer material includes blends of polymers recovered from materials diverted from the waste stream during a manufacturing process. The generic term pre-consumer material excludes the reutilization of materials, such as rework, regrind, or scrap, generated in a process and capable of being reclaimed within the same process that generated it. The reclaimed polymer may include a polymer or a blend of polymers recovered from post-consumer material, pre-consumer material, or combinations thereof.

**Reclaimed** polymer is distinct from virgin polymer. "Virgin polymer" refers to polymers that can be characterized as "primary (virgin) raw material," as defined by ISO 18604. The term virgin polymer can include polymers that have never been processed into any form of end-use product. Virgin polymer may also be referred to as various other terms.

Reclaimed polymer can be collected and processed prior to purification by the methods disclosed herein. For instance, for pre-purification the reclaimed polymer can be shredded, be washed, undergo metals reduction, e.g., removal, be density separated, be dried, and/or be sorted.

The reclaimed polymer can be a homopolymer, a copolymer, or a combination thereof. Examples of reclaimed polymer include polyolefins, such as polyethylene and polypropylene, polyesters, such as poly(ethylene terephthalate), vinyl polymers, such as poly(vinyl chloride), acrylonitrile, butadiene and styrene homopolymer and interpolymers, polyesters, such as poly(ethylene terephthalate) and poly(bisphenol-A carbonate), polyamides, such as Nylon 66, polycarbonates, such as poly(bisphenol-A carbonate), acrylics, such as poly(methyl methacrylate), fluorocarbon polymer, polyethers, polysaccharides, silicones, such as poly(dimethylsiloxane), thermoplastic elastomers, such as ethylene-propylene rubber, among others.

The reclaimed polymer can include a number of contaminants. Examples of contaminants include cellulous fibers, rubber such as nitrile rubber, fillers such as calcium carbonate, pigments, dyes, process aides, stabilizing additives and their degradation products, ink, adhesives, dirt and rock, crosslinked polymers, and other performance additives, such as plasticizers, slip agents, and antiblock, among other contaminants. Examples of contaminants include organoleptic compounds such as aldehydes, ketones, esters, organic pigments such as a di azo pigment (yellow), phthalocyanine green, phthalocyanine blue, lithol (red), inorganic pigments such as titanium dioxide (white), carbon black, cadmium selenium sulfide (red), molybdate orange, lead chromate (yellow), glycerol monostearate and PEG (antistatic agents), erucamide and oleamide (slip-promoting agents), hindered phenol and phosphite antioxidant, polyisobutylene as a cling agent, hindered amines as a UV stabilizer, and calcium carbonate, talc, and glass fibers (fillers), among other contaminants.

Embodiments of the present disclosure provide that the reclaimed polymer is dissolvable in a solvent. As used herein, the terms "dissolvable", "soluble", and "dissolved" indicate the association of the molecules or ions of a solute, e.g., the reclaimed polymer, with the molecules of a solvent, i.e., the act of solvation, that results in an incorporation of the solute in the solvent. The stability of a solute dissolved within a solvent depends strongly on the intermolecular interactions between the solute molecules, the solvent molecules, and between each other. The favorability of solute-solvent pairs can be estimated by calculating the associated Hildebrand or Hansen solubility parameters; two such methods being examples suitable for polymers and solvents. The thermodynamic stability of a mixture can be evaluated by the following equation: ΔGmix = ΔHmix -TΔSmix; where ΔGmix is the Gibbs free energy change of mixing of a solute with a solvent, ΔHmix is the enthalpy change of mixing, T is the absolute temperature, and ΔSmix is the entropy of mixing. A dissolved solute in a solvent is stable at a given temperature and pressure if the Gibbs free energy change of mixing of that solute and solvent is both negative and minimized.

As used herein, the terms "undissolvable", "insoluble", and "undissolved" may be used interchangeably.

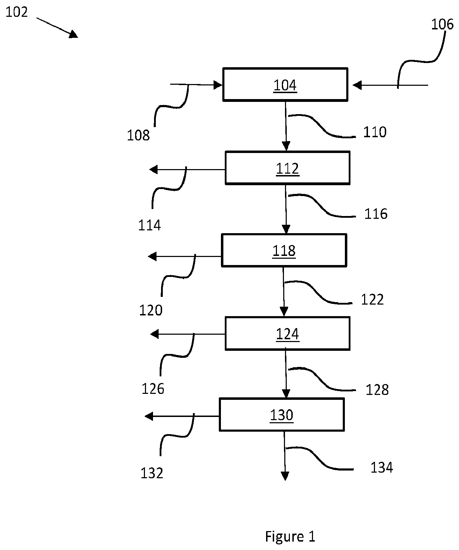

Figure 1 illustrates an example of a portion of a purification system 102 in accordance with one or more embodiments of the present disclosure. The purification system 102 can include a polymer dissolution vessel 104. As used herein, "a", "an", or "a number of" can refer to one or more of something. For example, a polymer dissolution vessel can refer to one or more polymer dissolution vessels, such as a series of vessels, vessels in parallel, or a combination thereof.

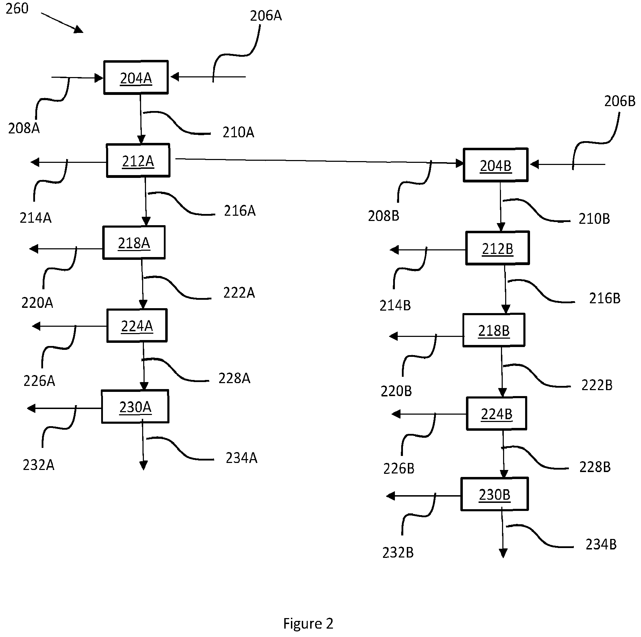

The figures herein follow a numbering convention in which the first digit or digits correspond to the drawing figure number and the remaining digits identify an element or component in the drawing. Similar elements or components between different figures may be identified by the use of similar digits. For example, 104 may reference element "04" in Figure 1, and a similar element may be referenced as 204 in Figure 2. Multiple elements or components that are similar in a figure may include letters to designate that the elements or components are similar. For instance, in Figure 2, "204A" is similar to "204B", which are both similar to 104 in Figure 1.

The polymer dissolution vessel 104 may be made of various materials and have differing shapes and/or sizes for various applications. As used herein, the term "vessel" refers to a tank, pipe, separator, decanter, column, heat exchanger, extruder, and/or other fluid processing hardware. The polymer dissolution vessel 104 may include a number of known components, e.g., an agitator and/or a heating coil. The polymer dissolution vessel 104 can include a number of inputs and/or outputs. For instance, the polymer dissolution vessel 104 can include input 106. Input 106 can be utilized to transfer the reclaimed polymer to the polymer dissolution vessel 104.

Embodiments provide that the reclaimed polymer transferred to the polymer dissolution vessel 104 is a solid, e.g., in a solid state rather than in a liquid state. The solid reclaimed polymer can be crystalline, semi-crystalline, amorphous, or combinations thereof. Transferring the solid reclaimed polymer to the polymer dissolution vessel 104 can reduce costs associated with melting the reclaimed polymer being transferred to the polymer dissolution vessel 104, can reduce processing complications associated with melting the reclaimed polymer being transferred to the polymer dissolution vessel 104, and/or can aid in the selective dissolution of the transferred reclaimed polymer in the polymer dissolution vessel 104.

The solid reclaimed polymer can have various shapes and/or sizes. For example, the solid reclaimed polymer can be shreds, spheres, cylinders, pellets, or combinations thereof, among other shapes. The solid reclaimed polymer can have an average diameter from 1 to 200 millimeters (mm).

The polymer dissolution vessel 104 can include input 108. Input 108 can be utilized to transfer solvent to the polymer dissolution vessel 104. Embodiments provide that the solvent is maintained as a liquid within the polymer dissolution vessel 104, e.g., with utilization of an appropriate temperature and pressure.

Embodiments provide that the solvent selectively dissolves the solid reclaimed polymer transferred to the polymer dissolution vessel 104 to make a polymer dissolution vessel composition. In other words, at the temperature and pressure of the polymer dissolution vessel 104, the solvent selectively dissolves the solid reclaimed polymer. A polymer's solubility, e.g., for selective dissolution, in a solvent may depend upon solvent/ polymer interaction, dissolution temperature, and crystallinity of the polymer. For instance, for dissolution of semi-crystalline polymer, solvent can diffuse into a surface of the polymer, dissolve a portion of the semi-crystalline structure so that the polymer becomes swollen and then an amorphous layer can be removed. The dissolution rate can depend on a number of factors, including but not limited to: the reclaimed polymer's crystallinity, agitator speed utilized, temperature, pressure, solid size, and/or solvent composition. The dissolution rate of polymers having a similar melting point and size can be significantly different. As the dissolution temperature, pressure and/or dissolution time changes, multiple liquid phases can be formed, and potentially, multiple polymers may be dissolved. However, the formation of multiple liquid polymer phases is not desirable, as it may undermine product mechanical quality and/or cause process fouling.

The polymer dissolution vessel composition can include the solvent, dissolved reclaimed polymer, and a number of contaminants that may be dissolved or undissolved. Contaminants that may be dissolved or undissolved include a number of those previously mentioned. Contaminants that may not be dissolved, e.g. insoluble contaminants, include pigments, cellulose fibers, calcium carbonate, talc, dirt, and adhesives, among other contaminants. Polymers other than the reclaimed polymer, which is selectively dissolved, may be an undissolved or dissolved contaminant. However, as discussed further herein, polymers other than the reclaimed polymer may be purified in a parallel process.

The solvent can be selected based upon the solid reclaimed polymer to be selectively dissolved. In other words, different solvents can be utilized for different solid reclaimed polymers. Examples of the solvent include aliphatic, aromatic or cyclical, saturated or unsaturated hydrocarbons, alcohols, carboxylic acids, esters, ketones, amines, and halogenated solvents, among others. One or more embodiments provide that the solvent is selected from ketones, alcohols, ethers, esters, alkenes, alkanes, and combinations thereof. One or more embodiments provide that the solvent is selected from acetone, methyl ethyl ketone, methanol, ethanol, propanol, isopropanol, dimethyl ether, diethyl ether, ethyl methyl ether, methyl acetate, ethyl acetate, ethylene, propylene, 1-butene, 2-butene, isobutylene, pentene, cyclopentene, isomers of pentene, hexene, cyclohexene, 1-methyl-cyclopentene, isomers of hexene, heptene, cycloheptene, 1-methyl-1-cyclohexene, isomers of heptene methane, ethane, propane, n-butane, isobutane, n-pentane, cyclopentane, isomers of pentane, n-hexane, cyclohexane1-methyl-1-cyclopentane, isomers of hexane, heptane, cycloheptane, 1-methy-1-cyclohexane, dimethylcycopentane, and isomers of heptane. One or more embodiments provide that the solvent is an alkane, such as a C3-C12 alkane, a C4-C10 alkane, a C5-C7 alkane, or a C5-C6 alkane. For instance, one or more embodiments provide that the solid reclaimed polymer is polyethylene and the solvent is pentane.

One or more embodiments provide that the solvent has a boiling point from 25 °C to 90 °C. All individual values and subranges from 25 °C to 90 °C are included; for example, the solvent can have a boiling point from a lower limit of 25, 28, or 30 °C to an upper limit of 90, 80, or 70 °C. Herein, "boiling point" refers to the boiling temperature at an absolute pressure of exactly 100 kPa (1 bar, 14,5 psia, 0,9869 atm) as established by the International Union of Pure and Applied Chemistry (IUPAC). One or more embodiments provide that a low boiling point solvent, e.g., having a boiling point from 25 °C to 75 °C, is utilized. Utilizing the low boiling point solvent may reduce residual solvent in a final purified reclaimed polymer.

As used herein "solvent" refers to a single solvent, e.g., pentane, or a combination of solvents, e.g., a combination of pentane and diethyl ether. Embodiments provide that when a combination of solvents is utilized, each of the solvents of the combination of solvents have a boiling point within 20 °C of one another. One or more embodiments provide that when a combination of solvents is utilized, each of the solvents of the combination of solvents have a boiling point within 15, 10, or 5 °C of one another. The solvent may be added at various points in the process. For instance, the solvent may be added to the polymer dissolution vessel 104, the filtration vessel 112, the sorptive separation vessel 118, and/or the extraction vessel 124. One or more embodiments provide that a single solvent that is utilized to selectively dissolve the solid reclaimed polymer transferred to the polymer dissolution vessel is 100 wt% of a total weight of solvent utilized in the process. For instance, when the solid reclaimed polymer is polyethylene and the solvent, e.g., the single solvent, is pentane, one or more embodiments provide that only pentane is utilized, e.g., no other solvents are utilized.

The solvent can be from 80 to 95 wt% based upon a total weight of the solid reclaimed polymer and the solvent transferred to the polymer dissolution vessel to make the polymer dissolution vessel composition. All individual values and subranges from 80 to 95 wt% are included; for example, the solvent can be from a lower limit of 80, 82, or 85 wt% to an upper limit of 95, 93, or 90 wt% based upon a total weight of the solid reclaimed polymer and the solvent transferred to the polymer dissolution vessel to make the polymer dissolution vessel composition.

Similarly, the solid reclaimed polymer can be from 5 to 20 wt% based upon a total weight of the solid reclaimed polymer and the solvent transferred to the polymer dissolution vessel to make the polymer dissolution vessel composition. All individual values and subranges from 5 to 20 wt% are included; for example, the solid reclaimed polymer can be from a lower limit of 5, 7, or 10 wt% to an upper limit of 20, 18, or 15 wt% based upon a total weight of the solid reclaimed polymer and the solvent transferred to the polymer dissolution vessel to make the polymer dissolution vessel composition.

The solid reclaimed polymer that is transferred to the polymer dissolution vessel 104 may contact the solvent within the polymer dissolution vessel for different times, e.g., different residence times, for various applications. For instance, the solid reclaimed polymer that is transferred to the polymer dissolution vessel can have an average residence time from 0,01 to 3 hours within the polymer dissolution vessel. All individual values and subranges from 0,01 to 3 hours are included; for example, the solid reclaimed polymer that is transferred to the polymer dissolution vessel can have an average residence time from a lower limit of 0,01, 0,05, or 0,1 hour to an upper limit of 3, 2, or 0,5 hours within the polymer dissolution vessel.

The polymer dissolution vessel 104 can have a temperature, e.g., an operating temperature, from 70 °C to 180 °C. Utilizing the temperature from 70 °C to 180 °C can provide that the solid reclaimed polymer is selectively dissolved in the solvent. All individual values and subranges from 70 °C to 180 °C are included; for example, the polymer dissolution vessel can have a temperature from a lower limit of 70, 90, or 110 °C to an upper limit of 180, 160, or 140 °C. One or more embodiments provide that the polymer dissolution vessel can have a temperature from 70 °C to 130 °C, e.g., when the reclaimed polymer is polyethylene. One or more embodiments provide that the polymer dissolution vessel can have a temperature from 110 °C to 180 °C, e.g., when the reclaimed polymer is polypropylene.

The polymer dissolution vessel 104 can have a pressure, e.g., an operating pressure, from 0,1 MPa (1 bar) to 3 MPa (30 bar) absolute. Unless otherwise noted, pressure reported herein is absolute pressure. Utilizing the pressure from 0,1 MPa (1 bar) to 3 MPa (30 bar) can provide that the solid reclaimed polymer is selectively dissolved in the solvent and that the solvent remains in a liquid state. All individual values and subranges from 0,1 MPa (1 bar) to 3 MPa (30 bar) are included; for example, the polymer dissolution vessel can have a pressure from a lower limit of 0,1 MPa (1), 0,2 MPa (2), or 0,3 MPa (3 bar) to an upper limit of 3 MPa (30), 2,5 MPa (25), or 1,5 MPa (15 bar).

The polymer dissolution vessel 104 can include output 110. Output 110 can be utilized to transfer the polymer dissolution vessel composition to a filtration vessel 112. The filtration vessel 112 may be made of various materials and have differing shapes and/or sizes for various applications. The filtration vessel 112 may include various filter media such as cloth, wool, linen, glass fiber, steel mesh, sintered metal, and combinations thereof. The filtration vessel 112 may include a number of known components. The filtration vessel 112 may include a solid bowl centrifuge, a self-cleaning strainer, a drum filter, a candle filter, a leaf filter, and/or rotary pressure filter, among others.

One or more embodiments provide that the filtration vessel 112 can provide a solid-liquid separation. For example, one or more insoluble solids (undissolved solids), e.g., undissolved contaminants, from the polymer dissolution vessel composition that is transferred to the filtration vessel 112 can be separated from liquid and soluble, e.g., dissolved, components of the polymer dissolution vessel composition to make a filtration vessel composition. The insoluble contaminant, e.g., the separated undissolved solid, can be removed via output 114, which may include some inadvertent solvent removal. Removing the undissolved contaminant can make a filtration vessel composition. The soluble (dissolved) reclaimed polymer, e.g., the filtration vessel composition, may be in a liquid phase, such as a solution or a molten state for instance.

The polymer dissolution vessel composition that is transferred to the filtration vessel 112 may have different residence times for various applications. For instance, the polymer dissolution vessel composition that is transferred to the filtration vessel can have an average residence time from 0,01 to 12 hours within the filtration vessel. All individual values and subranges from 0,01 to 12 are included; for example, the polymer dissolution vessel composition that is transferred to the filtration vessel can have an average residence time from a lower limit of 0,01, 0,05, or 0,1 hour to an upper limit of 12, 9, or 6 hours within the filtration vessel.

The filtration vessel 112 can have a temperature, e.g., an operating temperature, from 70 °C to 180 °C. All individual values and subranges from 70 °C to 180 °C are included; for example, the filtration vessel can have a temperature from a lower limit of 70, 100, or 110 °C to an upper limit of 180, 160, or 140 °C. One or more embodiments provide that the filtration vessel can have a temperature from 70 °C to 130 °C, e.g., when the reclaimed polymer is polyethylene. One or more embodiments provide that the filtration vessel can have a temperature from 110 °C to 180 °C, e.g., when the reclaimed polymer is polypropylene.

The filtration vessel 112 can have a pressure, e.g., an operating pressure, from 0,1 MPa (1 bar) to 3 MPa (30 bar). All individual values and subranges from 0,1 MPa (1 bar) to 3 MPa (30 bar) are included; for example, the filtration vessel can have a pressure from a lower limit of 0,1 MPa (1), 0,2 MPa (2) or 0,3 MPa (3 bar) to an upper limit of 3 MPa (30), 2,5 MPa (25), or 1,5 MPa (15 bar).

One or more embodiments provide that the polymer dissolution vessel 104 and the filtration vessel 112 each have a temperature within 20 °C of one another, each have a temperature within 10 °C of one another, or each have a temperature within 5 °C of one another. One or more embodiments provide that the polymer dissolution vessel 104 and the filtration vessel 112 are operated isothermally, e.g., the polymer dissolution vessel 104 and the filtration vessel 112 are operated at essentially the same temperature.

One or more embodiments provide that the polymer dissolution vessel 104 and the filtration vessel 112 each have a pressure within 1 MPa (10 bar) of one another, each have a pressure within 0,5 MPa (5 bar) of one another, each have a pressure within 0,3 MPa (3 bar) of one another, or each have a pressure within 0,1 MPa (1 bar) of one another.

The filtration vessel 112 can include output 116. Output 116 can be utilized to transfer the filtration vessel composition to a sorptive separation vessel 118. The sorptive separation vessel may be made of various materials and have differing shapes and/or sizes for various applications. The sorptive separation vessel 118 may include a number of known components. The sorptive separation vessel 118 may be a batch, continuous moving, continuous fixed bed, continuous fluidized bed, or pulsed bed vessel.

The sorptive separation vessel 118 may include solid media, which may be utilized to remove a contaminant from the filtration vessel composition that is transferred to the sorptive separation vessel 118. For example, the solid media can be utilized to remove a contaminant, e.g., a first soluble contaminant, by adsorption, absorption, electrostatics, size exclusion, ion exclusion, ion exchange, and/or other mechanisms that may be apparent to those having ordinary skill in the art. As an example, pigments and a number of other contaminants that may found in reclaimed polymers can be polar compounds or may have polar compounds on their surfaces and may preferentially interact with the solid media, which may also be at least slightly polar. These polar-polar interactions can be especially favorable when non-polar solvents, such as alkanes, are used as the solvent.

The solid media can be an inorganic material, a carbon-based material, and combinations thereof. Examples of the solid media include zeolite, activated carbon, silica gel, diatomite, perlite, clay, sand, molecular sieve, glass fiber, and cellulose material. One or more embodiments provide that the solid media is selected from zeolite, activated carbon, activated alumina, diatomaceous earth, and combinations thereof. The solid media may be maintained within the sorptive separation vessel 118 by known components, e.g., solid media containers. The solid media may be a fluidized bed, agitated, moving en mass, or maintained in a stationary position within the sorptive separation vessel 118.

The filtration vessel composition that is transferred to the sorptive separation vessel 118 may contact the solid media within the sorptive separation vessel for different times, e.g., different residence times, for various applications. For instance, the filtration vessel composition that is transferred to the sorptive separation vessel 118 can have an average residence time from 0,01 to 12 hours within the sorptive separation vessel. All individual values and subranges from 0,01 to 12 hours are included; for example, the filtration vessel composition that is transferred to the sorptive separation vessel can have an average residence time from a lower limit of 0,01, 0,05, or 0,1 hour to an upper limit of 12, 9, or 6 hours within the sorptive separation vessel.

The sorptive separation vessel 118 can have a temperature, e.g., an operating temperature, from 70 °C to 180 °C. All individual values and subranges from 70 °C to 180 °C are included; for example, the sorptive separation vessel can have a temperature from a lower limit of 70, 90, or 110 °C to an upper limit of 180, 160, or 140 °C. One or more embodiments provide that the sorptive separation vessel can have a temperature from 70 °C to 130 °C, e.g., when the reclaimed polymer is polyethylene. One or more embodiments provide that the sorptive separation vessel can have a temperature from 110 °C to 180 °C, e.g., when the reclaimed polymer is polypropylene.

The sorptive separation vessel 118 can have a pressure, e.g., an operating pressure, from 0,1 MPa (1 bar) to 3 MPa (30 bar). All individual values and subranges from 0,1 MPa (1 bar) to 3 MPa (30 bar) are included; for example, the sorptive separation vessel can have a pressure from a lower limit of 0,1 MPa (1), 0,2 MPa (2), or 0,3 MPa (3 bar) to an upper limit of 3 MPa (30), 2 MPa (20), or 1,5 MPa (15 bar).

One or more embodiments provide that the polymer dissolution vessel 104, the filtration vessel 112, and the sorptive separation vessel 118 each have a temperature within 20 °C of one another, each have a temperature within 10 °C of one another, or each have a temperature within 5 °C of one another. One or more embodiments provide that the polymer dissolution vessel 104, the filtration vessel 112, and the sorptive separation vessel 118 are operated isothermally, e.g., the polymer dissolution vessel 104, the filtration vessel 112, and the sorptive separation vessel 118 are operated at essentially the same temperature.

One or more embodiments provide that the polymer dissolution vessel 104, the filtration vessel 112, and the sorptive separation vessel 118 each have a pressure within 1 MPa (10 bar) of one another, each have a pressure within 0,5 MPa (5 bar) of one another, each have a pressure within 0,3 MPa (3 bar) of one another, or each have a pressure within 0,1 MPa (1 bar) of one another.

Utilizing the solid media to remove a first soluble contaminant, e.g., an undissolved contaminant, can provide a sorptive separation vessel composition. Because the first soluble contaminant is removed by utilizing the sorptive separation vessel 118 (and the solid media), the sorptive separation vessel composition is less contaminated as compared to the filtration vessel composition.

One or more embodiments provide that the sorptive separation vessel may be combined with the filtration vessel, e.g., with the solid media applied as filter aid. The filter aid may be stirred and continuously regenerated, for instance. One or more embodiments provide that the sorptive separation vessel may be omitted, e.g., the filtration vessel composition can be transferred to the extraction vessel.

After the filtration vessel composition that is transferred to the sorptive separation vessel has contacted the solid media to make the sorptive separation vessel composition, e.g., when the solid media is approaching its capacity to remove a contaminant, the solid media may be regenerated. Embodiments provide that that the solid media may be regenerated in situ or that the solid media may be removed, e.g., by outlet 120, from the sorptive separation vessel 118 for regeneration. Known regeneration components and processes may be utilized.

After, or while, the filtration vessel composition that is transferred to the sorptive separation vessel has contacted the solid media to make the sorptive separation vessel composition, output 122 can be utilized to transfer the sorptive separation vessel composition to an extraction vessel 124. The dissolved reclaimed polymer, e.g., the sorptive separation vessel composition, may be in a liquid phase, such as a solution or a molten state for instance. The extraction vessel may be made of various materials and have differing shapes and/or sizes for various applications.

The extraction vessel 124 may include a number of known components. The extraction vessel 124 may be a separator, decanter, or extraction column, for instance.

One or more embodiments provide that the extraction vessel 124 utilizes conditions, e.g., temperature and pressure, such that a liquid-liquid extraction is performed. In other words, conditions of the extraction vessel 124 may provide that the sorptive separation vessel composition transferred to the extraction vessel 124 and the extraction vessel composition, which is made by removing a first targeted portion of the solvent and a second soluble contaminant, are maintained in a liquid phase.

One or more embodiments provide that the extraction vessel 124 utilizes conditions, e.g., temperature and pressure, such that a supercritical extraction is performed. As mentioned, the extraction vessel composition, which is made by removing a first targeted portion of the solvent and a second soluble contaminant, can be maintained in a supercritical phase for a number of embodiments. A supercritical fluid is above its critical temperature and pressure, e.g., beyond the fluid's critical point. In this supercritical region, the supercritical fluid can enhance the removal of contaminants, such as a second soluble contaminant, e.g., those contaminants having relatively higher boiling points, as compared to other contaminants. Operating pressure and temperature can depend on a choice of the solvent and solvent concentration, e.g. an amount of solvent utilized with a particular amount of reclaimed polymer. The supercritical separation can be carried out with the existence of both solvent rich and polymer rich liquid phases. Partition of contaminants in two phases may also be sensitive to the pressure and temperature utilized.

The sorptive separation vessel composition that is transferred to the extraction vessel may have different residence times for various applications. For instance, the sorptive separation vessel composition that is transferred to the extraction vessel can have an average residence time from 0,01 to 3 hours within the extraction vessel. All individual values and subranges from 0,01 to 3 hours are included; for example, the sorptive separation vessel composition that is transferred to the extraction vessel can have an average residence time from a lower limit of 0,01, 0,05, or 0,1 hour to an upper limit of 3, 2, or 1,5 hours within the extraction vessel.

One or more embodiments provide that a portion of the extraction vessel composition can be removed from the extraction vessel 124 by output 126. The portion of the extraction vessel composition removed by output 126 can include a first targeted portion of the solvent and a second soluble contaminant. One or more embodiments provide that a sorptive separation may be performed subsequent to the extraction vessel.

The portion of the extraction vessel composition removed from the extraction vessel 124 by output 126 can be from 15 to 90 wt% of the material, e.g., the sorptive separation vessel composition that is transferred to the extraction vessel, that is transferred to the extraction vessel. All individual values and subranges from 15 to 90 wt% are included; for example, the portion of the extraction vessel composition removed from the extraction vessel by output 126 can be from a lower limit of 15, 20, or 25 wt% to an upper limit of 90, 85 or 80 wt%.

Similarly, the first targeted portion of the solvent removed from the extraction vessel 124 by output 126 can be from 15 to 95 wt% of the solvent, e.g., the solvent transferred to the polymer dissolution vessel 104 and other solvent input to the system 102. All individual values and subranges from 15 to 95 wt% are included; for example, the first targeted portion of the solvent removed from the extraction vessel by output 126 can be from a lower limit of 15, 20, or 25 wt% to an upper limit of 95, 90, or 85 wt% based upon a total weight of solvent transferred to the polymer dissolution vessel 104.

As mentioned, a second soluble contaminant can be removed from the extraction vessel 124 by output 126. The second soluble contaminant includes non-volatile contaminants. Examples of the second soluble contaminant include organoleptics, antioxidants, plasticizers, anti-block agents, antistatic agents, cling agents, ink components, and combinations thereof. Various amounts of the second soluble contaminant can be removed from the extraction vessel by output 126 for different applications.

The extraction vessel 124 can have a temperature, e.g., an operating temperature, from 130 °C to 300 °C. All individual values and subranges from 130 °C to 300 °C are included; for example, the extraction vessel can have a temperature from a lower limit of 130, 160, or 190 °C to an upper limit of 300, 280, or 260 °C.

The extraction vessel 124 can have a pressure, e.g., an operating pressure, from 3 MPa (30 bar) to 25 MPa (250 bar). All individual values and subranges from 3 MPa (30 bar) to 25 MPa (250 bar) are included; for example, the extraction vessel can have a pressure from a lower limit of 3 MPa (30), 5 MPa (50), or 7 MPa (70 bar) to an upper limit of 25 MPa (250), 22 MPa (220), or 18 MPa (180 bar).

After, or while, the first targeted portion of the solvent and the second soluble contaminant are removed from the extraction vessel 124 by output 122, a remaining portion of the extraction vessel composition can be transferred to a polymer concentration vessel 130. The polymer concentration vessel may be made of various materials and have differing shapes and/or sizes for various applications. The polymer concentration vessel 130 may include a number of known components, e.g., a throttling valve, heaters, separators, devol extruder, or gas purge. While a single polymer concentration vessel 130 is illustrated, embodiments are not so limited. For instance, the polymer concentration vessel 130 may comprise one or more flash vessels. As an example, the polymer concentration vessel 130 may comprise a series, e.g., three, of flash vessels, e.g., flash separators/flash drums.

The remaining portion of the extraction vessel composition, which may be in a fluid phase for instance, that is transferred to the polymer concentration vessel 130 can undergo a reduction in pressure, e.g., by passing through one or more throttling valves or other throttling devices. One or more embodiments provide that the polymer concentration vessel 130 may utilize a series of reduced pressures, e.g., where a particular reduced pressure is lower relative to a preceding reduced pressure, to remove a second targeted portion of the solvent and a third soluble contaminant to make a purified reclaimed polymer. The second targeted portion of the solvent and the third soluble contaminant can be removed from polymer concentration vessel 130 by output 132.

The second targeted portion of the solvent removed from the polymer concentration vessel 130 by output 132 can be from 5 to 85 wt% of the solvent, e.g., the solvent transferred to the polymer dissolution vessel 104. All individual values and subranges from 5 to 85 wt% are included; for example, the second targeted portion of the solvent removed from the polymer concentration vessel 130 by output 132 can be from a lower limit of 5, 10, or 15 wt% to an upper limit of 85, 80, or 75 wt% based upon a total weight of solvent transferred to the polymer dissolution vessel 104.

One or more embodiments provide that from 75 to 99,9999 wt% of all solvent fed to the system 102 can be separated from the purified reclaimed polymer. All individual values and subranges from 75 to 99,9999 wt% are included; for example, the wt% of all solvent fed to the system that can be separated from the purified reclaimed polymer can be from a lower limit of 75, 85, or 95 wt% to an upper limit of 99,9999 wt%.

Examples of the third soluble contaminant include organoleptics, antioxidants, plasticizers, anti-block agents, antistatic agents, ink components, and combinations thereof that are not removed from the extraction vessel 124 by output 126. One or more embodiments provide that the third soluble contaminant has a lower boiling point than the first soluble contaminant and the second soluble contaminant.

The polymer concentration vessel 130 can have a temperature, e.g., an operating temperature, from 130 °C to 300 °C. All individual values and subranges from 130 °C to 300 °C are included; for example, the polymer concentration vessel can have a temperature from a lower limit of 130, 150, or 170 °C to an upper limit of 300, 270, or 240 °C.

The polymer concentration vessel 130 can have a pressure, e.g., an operating pressure, from 0,002 MPa (0,02 bar), e.g., vacuum, to 5 MPa (50 bar). All individual values and subranges from 0,002 MPa (0,02 bar) to 5 MPa (50 bar) are included; for example, the polymer concentration vessel can have a pressure from a lower limit of 0,002 MPa (0,02), 0,003 MPa (0,03), or 0.004 MPa (0,04 bar) to an upper limit of 5 MPa (50), 4 MPa (40), or 3 MPa (30 bar).

The purified reclaimed polymer can be removed from the polymer concentration vessel 130 by output 134. After being removed from the polymer concentration vessel 130, the purified reclaimed polymer may undergo a number of further processing steps, such as pelletization.

The purified reclaimed polymer can have a number of properties that are desirable for various applications. For instance, the purified reclaimed polymer can provide low residual solvent, low odor, low gels, desirable color, and/or good mechanical properties, while exhibiting a reduction in regulated contaminations, e.g., a number of the contaminants previously discussed.

One or more embodiments provide that the solid media, as previously discussed, can be utilized with, e.g., added to, the filtration vessel 112. For instance, the solid media, as previously discussed, may be utilized as a filtration aid for a number of applications. As the solid media is utilized with the filtration vessel 112, one or more embodiments provide that the filtration vessel composition, which is made utilizing the solid media, is transferred to the extraction vessel 124. In other words, one or more embodiments provide that the filtration vessel 112 and the sorptive separation vessel 118, as shown in Figure 1, are combined, e.g., such that the sorptive separation vessel 118 may be eliminated.

For embodiments where the solid media is utilized with the filtration vessel, the second undissolved contaminant, as previously discussed, is removed to make the filtration vessel composition, e.g., rather than to make the sorptive separation vessel composition. As mentioned, the filtration vessel composition can then be transferred to the extraction vessel.

For embodiments where the solid media is utilized with the filtration vessel, the polymer dissolution vessel and the filtration vessel can each have a temperature within 20 °C of one another, can each have a temperature within 10 °C of one another, or can each have a temperature within 5 °C of one another. One or more embodiments provide that the polymer dissolution vessel and the filtration vessel are operated isothermally, e.g., the polymer dissolution vessel and the filtration vessel are operated at essentially the same temperature.

For embodiments where the solid media is utilized with the filtration vessel, the polymer dissolution vessel and the filtration vessel can each have a pressure within 1 MPa (10 bar) of one another, can each have a pressure within 0,5 MPa (5 bar) of one another, can each have a pressure within 0,3 MPa (3 bar) of one another, or can each have a pressure within 0,1 MPa (1 bar) of one another.

In one or more embodiments, the solvent can be purified in separate process steps and recycled to the dissolution and/or extraction vessels, thus reducing the amount of fresh solvent required for the method.

The Figure 2 illustrates an example of a portion of a system 260 in accordance with one or more embodiments of the present disclosure. The system 260 may be utilized where more than one reclaimed polymer is to be purified, for instance.

The system 260 may include and/or utilize a number of components analogous to components discussed in reference to Figure 1. For example, the system 260 may include: polymer dissolution vessels 204A, 204B including inputs 206A, 206B, inputs 208A, 208B, and outputs 210A, 210B; filtration vessels 212A, 212B including outputs 214A, 214B and outputs 216A, 216B; sorptive separation vessels 218A, 218B including outputs 220A, 220B and outputs 222A, 222B; extraction vessels 224A, 224B including 226A, 226B and outputs 228A, 228B; and polymer concentration vessels 230A, 230B including outputs 232A, 232B and outputs 234A, 234B.

As shown in Figure 2, the system 260 can comprise two of the systems 102, as shown in Figure 1, that are in parallel, where an output from the filtration vessel 212A can be utilized as an input for dissolution vessel 204B. As an example, a first reclaimed polymer, such as polyethylene, can be selectively dissolved in dissolution vessel 204A and purified by filtration, e.g., utilizing filtration vessel 2121A, sorptive separation, e.g., utilizing sorptive separation vessel 218A, and extraction, e.g. utilizing extraction vessel 224A, steps in a first instance of the disclosed method, with insoluble impurities including a second reclaimed polymer (an undissolved polymer from dissolution vessel 204A), such as polypropylene, being removed as solids from the filtration vessel 212A. This solids stream including the second reclaimed polymer can then be used as feedstock to a second instance of the disclosed method, wherein polypropylene is selectively dissolved, e.g. utilizing dissolution vessel 204B, at a different temperature, pressure, and/or solvent in a second dissolution vessel 204B, removed from undissolved impurities in a second filtration vessel 212B, and then purified from dissolved impurities in a second sorptive separation, e.g., utilizing sorptive separation vessel 218B, and extraction, e.g. utilizing extraction vessel 224B. In principle, this application of multiple instances of the disclosed method in parallel can be used to purify a number of different polymers present in the same reclaimed polymer feedstock.

### EXAMPLES

Example 1 was performed as follows. Aspen Plus V10 (obtained from Aspen Technology) was utilized to perform computations for methods for purifying a reclaimed polymer. For the computations, polymers (polyethylene and polypropylene), solvents (n-pentane), and contaminants (calcium carbonate (2 wt% in the polymer), limonene (100 ppm), butylated hydroxytoluene (100 ppm), 1-decanal (100 ppm), dibutyl-o-phthalate (100 ppm) and bisphenol A (100 ppm) were utilized.

For the computations, a PC-SAFT (perturbed chain statistical associating fluid theory) equation of state model was utilized. A number of unary parameters were available in the Aspen Plus databank (e.g., for polyethylene, polypropylene and a number of solvents). For the unary parameters that were not available in the Aspen Plus databank, available liquid density, liquid heat capacity, and liquid vapor pressure data from TDE NIST databank (Thermo Data Engine, National Institute of Standard and Technology) was regressed. Publicly available mixture data was used to adjust the binary interaction parameters.

For the computations, recycled polyethylene (e.g., corresponding to input 106 as discussed herein and referred to as Computational Stream (CS) 106) was fed into a dissolution vessel (e.g., as discussed herein) together with pentane (e.g., corresponding to input 108 as discussed herein and referred to as CS 108); polyethylene was selectively dissolved in pentane at 2 MPa (20 bar) and 110 °C over polypropylene. The output from the dissolution vessel went through subsequent filtration and sorptive separation steps (e.g., as discussed herein) to remove undissolved polypropylene and calcium carbonate to obtain CS 122 (e.g., corresponding to output 122 as discussed herein). Computations specified that 95% of the insoluble components, such as polypropylene and calcium carbonate, were removed. CS 122 was further pressurized (to 10 MPa (100 bar)) and heated (to 225 °C) before entering a one stage extraction vessel (e.g., as discussed herein); at this step, non-volatile contaminants were better removed than with the devolatilization only. From the extraction, a solvent rich light phase was cleaned and recycled back and a polymer rich heavy phase went through additional devolatilization (e.g., polymer concentration vessel as discussed herein). From the devolatilization, solvent vapor was collected, contaminants were removed, and the cleaned solvent was recycled. A final devolatilization step was performed at 0,002 MPa (20 mbara) and 250 °C. Then, for CS 134 (e.g., corresponding to output 134 as discussed herein), it was indicated that 99 wt% limonene and decanal, 90 wt% butylated hydroxytoluene and dibutyl-o-phthalate, and 50 wt% bisphenol A were removed. A number of Computational Stream conditions and components are shown in Table 1.

**Table 1**

| Computational Stream | CS 106 | CS 108 | CS 122 | CS 128 | CS 134 |
|---|---|---|---|---|---|
| Temperature (°C) | 35 | 110 | 110 | 225 | 250 |
| Pressure (MPa) ((bara)) | 0.1 (1) | 2 (20) | 2 (20) | 10 (100) | 0.002 (0.02) |
| Flow (kg/hr) | 10205 | 90000 | 99042 | 23223 | 9479 |
| Polyethylene (kg/hr) | 9500 | 0 | 9453 | 9452 | 9452 |
| Polypropylene (kg/hr) | 500 | 0 | 25 | 25 | 25 |
| Pentane (kg/hr) | 0 | 90000 | 89550 | 13743 | 1.1 |
| Limonene (kg/hr) | 1 | 0 | 1 | 0.19 | 0.002 |
| Decanal (kg/hr) | 1 | 0 | 1 | 0.20 | 0.007 |
| Butylated hydroxytoluene (kg/hr) | 1 | 0 | 1 | 0.21 | 0.03 |
| Dibutyl-o-phthalate (kg/hr) | 1 | 0 | 1 | 0.26 | 0.15 |
| Bisphenol A (kg/hr) | 1 | 0 | 1 | 0.50 | 0.48 |
| CaCO3 (kg/hr) | 200 | 0 | 10 | 10 | 10 |

The data of Table 1 indicate that the reclaimed polymer is purified. The data of Table 1 indicate an improved contaminant removal efficiency, as compared to other polymer purification processes. For Example 1, a solid polymer was utilized, and Example 1 provided a purified reclaimed polymer having an improved, e.g., lower, amount of residual solvent, as compared to other polymer purification processes.

Example 2 was performed as follows. 1,0344 g of polyethylene (Dowlex 2045G) and 1,0317 g of polypropylene (Braskem D115a) were added to 8,28 g of n-pentane (Acros Organics, 99+%, extra pure, anhydrous) in an empty pressure cell (Anton Paar, 15 MPa (150 bar), stainless steel, maximum temperature = 300 °C). The number of polypropylene pellets added to the cell was counted to be 54. The cell was closed with a starch stirrer measuring geometry (Anton Paar, ST24/PRA1) attached to the header. The closed cell was transferred to a rheometer (Anton Paar MCR 102) fitted with an electronic heater (Anton Paar, C-ETD300). An outlet port on the top of the cell was connected to a high-pressure nitrogen gas source (Airgas, UHP grade), and gas pressure was controlled by a regulator. A measuring cup on the rheometer was lowered into position over the cell to enable controlled rotation of the stirrer geometry inside the cell using a magnetic coupling.

The cell was pressurized to 1,6 MPa (16 bar) using nitrogen gas added to the headspace of the cell. Using Rheocompass software (Anton Paar, V1.20.493), the stirrer was set to rotate at 400 rpm and the cell was heated to 110 °C. The temperature was controlled by a thermocouple in the heater and monitored by an independent thermocouple in the wall of the cell. The temperature in the wall of the cell reached 110 °C after 15 minutes and did not exceed 111 °C for Example 2. The cell remained at a setpoint of 110 °C and 400 rpm for 6 hours measured from the start of agitation at room temperature.

After this remaining at the setpoint, agitation was stopped and the cell was cooled to approximately 20 °C. Pressurized nitrogen gas in the headspace was vented to atmospheric pressure, and the cell was disconnected and removed from the rheometer. The cell was opened and material, observed to be a white paste with entrained undissolved pellets, was recovered. The undissolved pellets were separated from the white paste and were counted and determined to be the same as the number of polypropylene pellets added at the beginning (54) of Example 2. The white paste, indicative of polymer that was dissolved during Example 2 and then recrystallized during the cooldown, was analyzed using Differential Scanning Calorimetry (DSC) to determine the relative amounts of polyethylene and polypropylene, inferring from this technique the quantities of each that were dissolved during Example 2.

DSC measurements were conducted using TA Instruments Discovery 2500 Differential Scanning Calorimeter. First, the white paste (approximately 0,5 g) was compressed into a film at 172,37 MPa (25.000 psi), 190 °C, for 10-15 seconds. The compressed paste (3,7 mg) was weighed and placed in a DSC pan. A lid was crimped on the pan to ensure a closed atmosphere and the pan placed in a DSC cell. The contents of the DSC pan were heated at a rate of 10 °C/min to 190 °C and held isothermally for five minutes. The contents of the DSC were then cooled at a rate of 10 °C/min to -40 °C and held isothermally for five minutes. The contents of the DSC were then heated at a rate of 10 °C/min to 230 °C and held isothermally for five minutes. During the heating and cooling ramps, the data acquisition was turned on and heat flow measured with temperature. Melting peaks (Tm), crystallization peaks (Tc), heat of fusion for melting (ΔHfm), heat of fusion for crystallinity (ΔHfc), and the glass transition temperature (Tg) of the polymer sample were processed using TA Instrument Universal Analysis software. The polyethylene and propylene concentrations were determined by integrating the areas of the peaks corresponding to polyethylene (119,3 and 122,2 °C) and polypropylene (169,4 °C) in the plot of heat flow vs temperature during the temperature ramp from -40 to 230 °C. The relative area of the polypropylene peak of the mixture above 140 °C to reference peak of pure polypropylene (93,2 J/g) gives a measure of relative wt% of polypropylene in the polymer mixture. This indicated that 2,5 wt% of the white paste dissolved in the pressure cell was polypropylene, relative to 97,5 wt% polyethylene. The results are shown in Table 2 for the dissolution at 110 °C.

**Table 2**

| | Polyethylene | Polypropylene |
|---|---|---|
| Initial Polymer Composition (wt %) | 50 | 50 |
| Final Polymer Composition (wt %) | 97.5 | 2.5 |

The data of Table 2 show that a mixture of polyethylene and polypropylene (50:50 wt%) was separated by selectively dissolving the polymers in n-pentane at 110 °C. The data of Table 2 show that >97 wt% of the polypropylene was removed.

## Claims

1. A method for purifying a reclaimed polymer, the method comprising:
transferring the reclaimed polymer to a polymer dissolution vessel, wherein the reclaimed polymer comprises a solid;
selectively dissolving the solid reclaimed polymer in the polymer dissolution vessel with a solvent to make a polymer dissolution vessel composition, wherein the polymer dissolution vessel has a temperature from 70 °C to 180 °C and a pressure from 0,1 MPa (1 bar) to 3 MPa (30 bar);
transferring the polymer dissolution vessel composition to a filtration vessel to remove a first insoluble contaminant and make a filtration vessel composition, wherein the filtration vessel has a temperature from 70 °C to 180 °C and a pressure from 0,1 MPa (1 bar) to 3 MPa (30 bar);
transferring the filtration vessel composition to a sorptive separation vessel to remove a first soluble contaminant and make a sorptive separation vessel composition, wherein the sorptive separation vessel has a temperature from 70 °C to 180 °C and a pressure from 0,1 MPa (1 bar) to 3 MPa (30 bar); and
transferring the sorptive separation vessel composition to an extraction vessel to remove a first targeted portion of the solvent and a second soluble contaminant to make an extraction vessel composition, wherein the extraction vessel has a temperature from 130 °C to 300 °C and a pressure from 3 MPa (30 bar) to 25 MPa (250 bar); and
transferring the extraction vessel composition to a polymer concentration vessel to remove a second targeted portion of the solvent and a third soluble contaminant to make a purified reclaimed polymer.

2. The method of claim 1, wherein the reclaimed polymer is selected from polyethylene and polypropylene.

3. The method of claim 1, wherein the solvent comprises an alkane.

4. The method of claim 3, wherein the alkane solvent is selected from C5-C7 alkanes.

5. The method of claim 1, wherein the polymer dissolution vessel, the filtration vessel, and the sorptive separation vessel each have a temperature within 20 °C of one another and wherein the polymer dissolution vessel, the filtration vessel, and the sorptive separation each have a pressure within 1 MPa (10 bar) of one another.

6. The method of claim 1, wherein polymer concentration vessel comprises one or more flash vessels.

7. The method of claim 1, wherein the solvent has a boiling point from 25 °C to 90 °C.

8. The method of claim 1, wherein the reclaimed polymer is in a liquid phase in the filtration vessel and the sorptive separation vessel.

9. The method of claim 1, wherein the solvent is from 80 to 95 weight percent based upon a total weight of the solid reclaimed polymer and the solvent transferred to the polymer dissolution vessel to make the polymer dissolution vessel composition.

## Patentansprüche

1. Verfahren zum Reinigen eines zurückgewonnenen Polymers, wobei das Verfahren umfasst:
Überführen des zurückgewonnenen Polymers in einen Polymerauflösungsbehälter, wobei das zurückgewonnene Polymer einen Feststoff umfasst;
selektives Auflösen des festen zurückgewonnenen Polymers in dem Polymerauflösungsbehälter mit einem ersten Lösungsmittel, um eine Polymerauflösungsbehälter-Zusammensetzung herzustellen, wobei der Polymerauflösungsbehälter eine Temperatur von 70 °C bis 180 °C und einen Druck von 0,1 MPa (1 bar) bis 3 MPa (30 bar) aufweist;
Überführen der Polymerauflösungsbehälter-Zusammensetzung in einen Filtrierbehälter, um eine erste unlösliche Verunreinigung zu entfernen und eine Filtrierbehälter-Zusammensetzung herzustellen, wobei der Filtrierbehälter eine Temperatur von 70 °C bis 180 °C und einen Druck von 0,1 MPa (1 bar) bis 3 MPa (30 bar) aufweist;
Überführen der Filtrierbehälter-Zusammensetzung in einen Sorptiv-Trennungsbehälter, um eine erste lösliche Verunreinigung zu entfernen und eine Sorptiv-Trennungsbehälter-Zusammensetzung herzustellen, wobei der Sorptiv-Trennungsbehälter eine Temperatur von 70 °C bis 180 °C und einen Druck von 0,1 MPa (1 bar) bis 3 MPa (30 bar) aufweist; und
Überführen der Sorptiv-Trennungsbehälter-Zusammensetzung in einen Extraktionsbehälter, um einen ersten anvisierten Anteil des Lösungsmittels und eine zweite lösliche Verunreinigung zu entfernen, um eine erste Extraktionsbehälter-Zusammensetzung herzustellen, wobei der erste Extraktionsbehälter eine Temperatur von 130 °C bis 300 °C und einen Druck von 3 MPa (30 bar) bis 25 MPa (250 bar) aufweist; und
Überführen der Extraktionsbehälter-Zusammensetzung in einen zweiten Polymerkonzentrationsbehälter, um einen zweiten anvisierten Anteil des Lösungsmittels und eine dritte lösliche Verunreinigung zu entfernen, um ein gereinigtes zurückgewonnenes Polymer herzustellen.

2. Verfahren nach Anspruch 1, wobei das zurückgewonnene Polymer aus Polyethylen und Polypropylen ausgewählt wird.

3. Verfahren nach Anspruch 1, wobei die Inhaltsstoffe ferner ein Alkan umfassen.

4. Verfahren nach Anspruch 3, wobei das Alkanlösungsmittel ausgewählt ist aus C5-C7-Alkanen ausgewählt ist.

5. Verfahren nach Anspruch 1, wobei der Polymerauflösungsbehälter, der Filtrierbehälter und der Sorptiv-Trennungsbehälter jeweils eine Temperatur innerhalb von 20 °C voneinander aufweisen und wobei der Polymerauflösungsbehälter, der Filtrierbehälter und der Sorptiv-Trennungsbehälter jeweils einen Druck innerhalb von 1 MPa (10 bar) voneinander aufweisen.

6. Verfahren nach Anspruch 1, wobei der erste Polymerkonzentrationsbehälter einen oder mehrere Flash-Behälter umfasst.

7. Verfahren nach Anspruch 1, wobei das Lösungsmittel einen Siedepunkt von 25 °C bis 90 °C aufweist.

8. Verfahren nach Anspruch 1, wobei das zurückgewonnene Polymer in einer flüssigen Phase in dem Filtrierbehälter und dem Sorptiv-Trennungsbehälter vorliegt.

9. Verfahren nach Anspruch 1, wobei das Lösungsmittel von 80 bis 95 Gewichtsprozent bezogen auf ein Gesamtgewicht des festen zurückgewonnenen Polymers und des in den Polymerauflösungsbehälter überführten Lösungsmittels beträgt, um die Polymerauflösungsbehälter-Zusammensetzung herzustellen.

## Revendications

1. Procédé de purification d'un polymère récupéré, ledit procédé comprenant :
le transfert du polymère récupéré dans un récipient de dissolution de polymère, dans lequel le polymère récupéré comprend un solide ;
la dissolution sélective du polymère solide récupéré dans le récipient de dissolution de polymère avec un solvant pour préparer une composition de récipient de dissolution de polymère, dans lequel le récipient de dissolution de polymère a une température allant de 70 °C à 180 °C et une pression allant de 0,1 MPa (1 bar) à 3 MPa (30 bar) ;
le transfert de la composition de récipient de dissolution de polymère dans un récipient de filtration pour retirer un premier contaminant insoluble et préparer une composition de récipient de filtration, dans lequel le récipient de filtration a une température allant de 70 °C à 180 °C et une pression allant de 0,1 MPa (1 bar) à 3 MPa (30 bar) ;
le transfert de la composition de récipient de filtration dans un récipient de séparation par sorption pour retirer un premier contaminant soluble et préparer une composition de récipient de séparation par sorption, dans lequel le récipient de séparation par sorption a une température allant de 70 °C à 180 °C et une pression allant de 0,1 MPa (1 bar) à 3 MPa (30 bar) ; et
le transfert de la composition de récipient de séparation par sorption dans un récipient d'extraction pour retirer une première partie ciblée du solvant et un deuxième contaminant soluble pour préparer une composition de récipient d'extraction, dans lequel le récipient d'extraction a une température allant de 130 °C à 300 °C et une pression allant de 3 MPa (30 bar) à 25 MPa (250 bar) ; et
le transfert de la composition de récipient d'extraction dans un récipient de concentration de polymère pour retirer une seconde partie ciblée du solvant et un troisième contaminant soluble pour préparer un polymère récupéré purifié.

2. Procédé selon la revendication 1, dans lequel le polymère récupéré est choisi parmi polyéthylène et polypropylène.

3. Procédé selon la revendication 1, dans lequel le solvant comprend un alcane.

4. Procédé selon la revendication 3, dans lequel le solvant alcane est choisi parmi des alcanes en C5-C7.

5. Procédé selon la revendication 1, dans lequel le récipient de dissolution de polymère, le récipient de filtration, et le récipient de séparation par sorption ont chacun une température à moins de 20 °C les uns des autres et dans lequel le récipient de dissolution de polymère, le récipient de filtration, et le récipient de séparation par sorption ont chacun une pression à moins de 1 MPa (10 bar) les uns des autres.

6. Procédé selon la revendication 1, dans lequel le récipient de concentration de polymère comprend un ou plusieurs récipients de vaporisation éclair.

7. Procédé selon la revendication 1, dans lequel le solvant a un point d'ébullition allant de 25 °C à 90 °C.

8. Procédé selon la revendication 1, dans lequel le polymère récupéré est en phase liquide dans le récipient de filtration et le récipient de séparation par sorption.

9. Procédé selon la revendication 1, dans lequel le solvant représente de 80 à 95 pour cent en poids sur la base d'un poids total du polymère solide récupéré et du solvant transféré dans le récipient de dissolution de polymère pour préparer la composition de récipient de dissolution de polymère.
